# EUROPEAN PATENT SPECIFICATION

(11) **EP 2 586 659 B1**
(45) Date of publication and mention of the grant of the patent: **12.08.2020**
(21) Application number: 12190134.2
(22) Date of filing: 26.10.2012
(51) Int. Cl.: B60Q 1/14, F21S 41/143, F21S 41/663, F21S 41/692

(54) **Vehicle headlamp**
Fahrzeugscheinwerfer
Phare de véhicule

(30) Priority: 28.10.2011 JP 2011236958
(43) Date of publication of application: 01.05.2013
(73) Proprietor: Koito Manufacturing Co., Ltd., Tokyo 108-8711 (JP)
(72) Inventor: Komatsu, Motohiro, Shizuoka (JP); Inoue, Takashi, Shizuoka (JP); Mochizuki, Mitsuyuki, Shizuoka (JP); Sugiyama, Yuji, Shizuoka (JP)
(74) Representative: Hoffmann Eitle

(56) References cited:
- EP-A1- 2 213 935
- EP-A2- 2 101 107
- EP-A2- 2 282 110
- EP-A2- 2 455 656
- EP-A2- 2 546 567
- DE-A1- 19 756 437
- JP-A- 2011 124 100
- US-A1- 2011 235 349

## Description

### BACKGROUND

### Technical Field

The present invention relates to a vehicle headlamp and, more particularly, to a vehicle headlamp which is capable of making a desired light distribution pattern by turning on/off a plurality of semiconductor light emitting devices and moving a movable shade and performing a light distribution control properly according to a driving condition of a vehicle.

### Related Art

A vehicle headlamp is known in which a light source is arranged in a lamp outer housing that is formed by a cover and a lamp body and a movable shade changes a shielding range of a light emitted from the light source and thus a light distribution pattern can be switched (see JP-A-2011-29121, for example).

In the vehicle headlamp disclosed in JP-A-2011-29121, a switching between a high-beam light distribution pattern for irradiating a far field and a low-beam light distribution pattern for irradiating a near field can be made.

However, in the vehicle headlamp disclosed in JP-A-2011-29121, although it is possible to switch the high-beam light distribution pattern and the low-beam light distribution pattern, it is difficult to form a desired light distribution pattern depending on a driving condition of the vehicle (for example, the presence or a position of a preceding vehicle, an oncoming vehicle, a pedestrian, a sign, a signal or the like).

Accordingly, visibility for the preceding vehicle, the oncoming vehicle, the pedestrian, the sign, the signal or the like might be degraded and also might be given glare.

Other related art may be found in EP 2 213 935 A1 being directed to a vehicle headlamp and EP 2 546 567 A1 being directed to a vehicle headlight. The vehicle headlamp described in EP 2 213 935 A1 is provided with: a fixed reflector having reflecting surfaces made of parabola-based free curved faces; movable reflectors having reflecting surfaces made of parabola-based free curved faces; and semiconductor-type light sources having light emitting chips shaped like a planar rectangle. When the movable reflectors are positioned in a first location, a light distribution pattern for low beam is obtained. Moreover, the head light disclosed in EP 2 546 567 A1 includes a light source including a light source including: a circuit board, a plurality of semiconductor light emitting elements arranged in line on the surface of the circuit board, a first reflector disposed on the surface of the circuit board and configured to reflect the light emitted from the semiconductor light emitting elements toward the front area to form a lower portion H1 of a high beam pattern, and a second reflector disposed on the surface of the circuit board and configured to reflect the light emitted from the semiconductor light emitting elements toward the front area to form an upper portion H2 of the high beam pattern, wherein the semiconductor light emitting elements are disposed between the first reflector and the second reflector, and a projection lens configured to project the light emitted from the semiconductor light emitting elements toward the front area; and a changing means configured to change the upper portion H2 of the high beam pattern by controlling an incident state of the light which is incident on the second reflector.

### SUMMARY OF THE INVENTION

It is an illustrative aspect of the present invention to provide a vehicle headlamp capable of performing a proper light distribution control according to the driving condition of the vehicle in order to improve the visibility and prevent the occurrence of the glare.

The present invention is defined by the appendant independent product claim 1 and system claim 7. The respective dependent claims describe optional features and preferred embodiments.

According to a first aspect of the invention, there is provided a vehicle headlamp (1) comprising a light source (10). The light source (10) comprises: a circuit board (11) whose surface is directed toward a front area of the vehicle headlamp (1); a plurality of semiconductor light emitting elements (12) arranged in a line on the surface of the circuit board and each configured to emit light; an upper reflector (14) disposed on the surface of the circuit board and configured to reflect the light emitted from the semiconductor light emitting elements toward the front area; a lower reflector (13) disposed on the surface of the circuit board and configured to reflect the light emitted from the semiconductor light emitting elements toward the front area, wherein the semiconductor light emitting elements are disposed between the upper reflector and the lower reflector; and a movable shade (15) configured to move in a front-rear direction of the vehicle headlamp so as to cover/uncover one of the upper reflector (14) and the lower reflector (13), wherein when the movable shade (15) covers said one of the upper reflector (14) and the lower reflector (13), the light which is incident on said one of the upper reflector (14) and the lower reflector (13) is blocked by the movable shade. The vehicle headlamp is configured to form a certain light distribution pattern by turning on/off of the respective semiconductor light emitting elements and moving the movable shade in the front-rear direction.

According to a second aspect of the present invention, the movable shade (15) is configured to cover/uncover the lower reflector (13).

According to a third aspect of the present invention, the movable shade (15) is configured to cover/uncover the upper reflector (14).

According to a fourth aspect of the present invention, when the movable shade (15) entirely covers a reflection surface of said one of the upper reflector (14) and the lower reflector (13).

According to a fifth aspect of the present invention, when the movable shade (15) partially covers a reflection surface of said one of the upper reflector (14) and the lower reflector (13).

According to a sixth aspect of the present invention, a reflection surface (13a) of the lower surface (13) is formed in a paraboloidal surface, and a reflection surface (14a) of the upper surface (14) is formed in a hyperboloidal surface.

According to a seventh aspect of the present invention, a light distribution pattern control system. The light distribution pattern control system comprises: a left lamp (1A) and a right lamp (1B), each of which has the same configuration as the vehicle headlamp as described above. The left lamp (1A) is configured to form a first light distribution pattern by turning on/off of the respective semiconductor light emitting elements and moving the movable shade in the front-rear direction. The right lamp (1B) is configured to form a second light distribution pattern by turning on/off of the respective semiconductor light emitting elements and moving the movable shade in the front-rear direction. A light distribution pattern of the light distribution pattern control system is formed by combining the first and second light distribution patterns.

### BRIEF DESCRIPTION OF THE DRAWINGS

FIG. 1 is a schematic longitudinal sectional view of a vehicle headlamp according to an embodiment of the present invention;
FIG. 2 is a perspective view showing a light source and a movable shade;
FIG.3 is a cross-sectional view showing the light source and the movable shade;
FIG. 4 is a schematic view showing how the light distribution pattern can be controlled by the movable shade;
FIG. 5 is a perspective view showing the light source and the moveable shade which is configured to cover a half portion of a reflection surface of the reflector, in a left lamp and a right lamp;
FIG. 6 is a schematic view showing how the light distribution pattern can be controlled by the configuration shown in FIG. 5;
FIG. 7 is a perspective view showing the light source and the moveable shade which is disposed to cover the upper reflector or the lower reflector, in the left lamp and the right lamp; and
FIG. 8 is a schematic view showing how the light distribution pattern can be controlled by the configuration shown in FIG. 7.

### DETAILED DESCRIPTION

Hereinafter, the same or equivalent components, members, and signals, which are shown in the respective drawings, are denoted by the same reference numerals, and the repeated description thereof will be appropriately omitted. Further, some of members, which are not important in the description, will be omitted in the respective drawings.

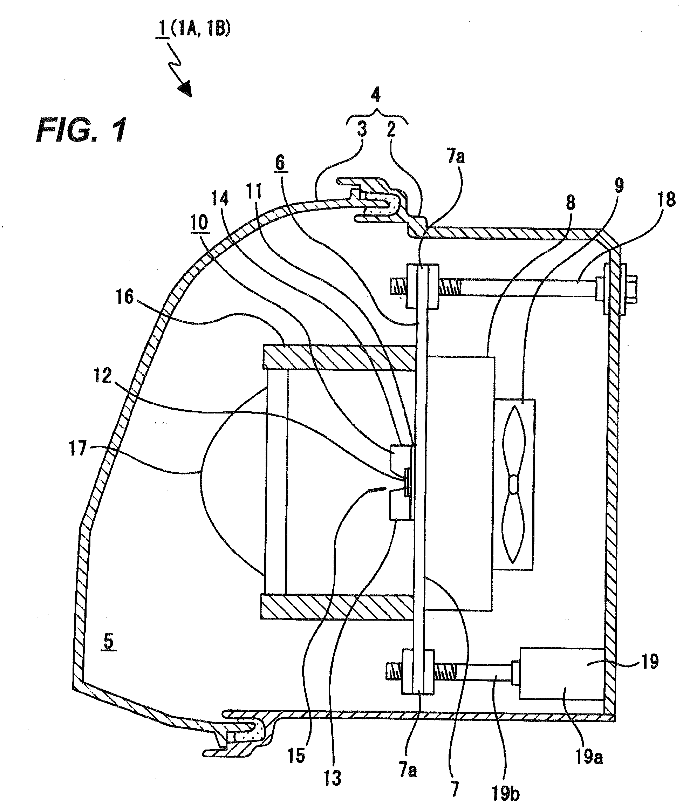

A vehicle headlamp 1 includes a left lamp 1A located at a left side and a right lamp 1B located at a right side (see, FIG. 1).

The left lamp 1A and the right lamp 1B are respectively configured so that a lamp body 2 whose front side is opened and a cover 3 covering the front side of the lamp body 2 forms a lamp outer housing 4 and an interior of the lamp outer housing 4 is configured as a lamp chamber 5 and a lamp unit 6 is disposed in the lamp chamber 5.

In the lamp unit 6, certain components are mounted on a bracket 7 attached to the lamp chamber 5 and the lamp unit 6 can be tilted in a left-right direction and a front-rear direction by an optical axis adjustment mechanism, which will be described later.

The bracket 7 is formed from a metal material with high thermal conductivity and is provided at its both upper and lower ends with supported parts 7a, 7a, 7a (only two supported parts are shown in FIG. 1). Heat radiation fins 8, 8,.... are spaced apart from each other, for example, in the left-right direction on a rear surface of the bracket 7. A heat radiating fan 9 is mounted on a rear surface of the heat radiation fins 8, 8,....

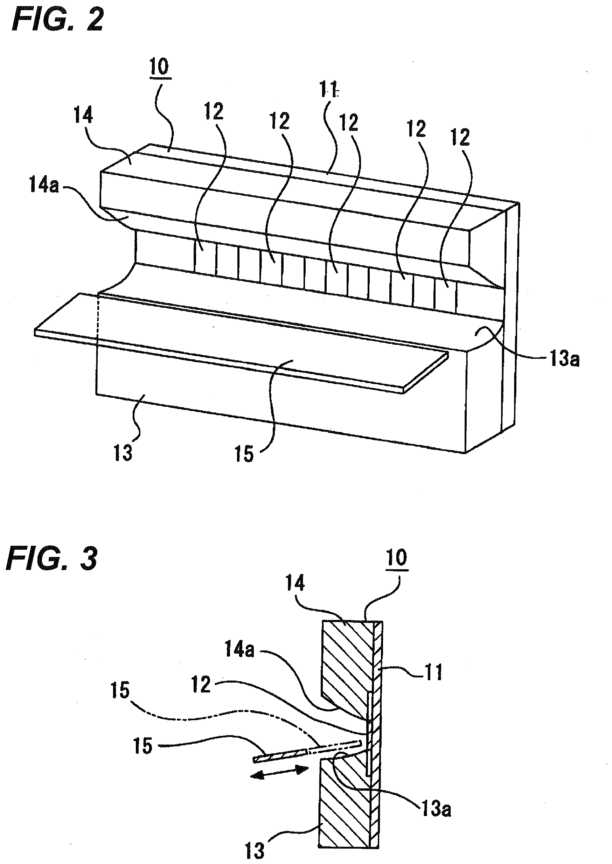

A light source 10 is mounted to the center of a front surface of the bracket 7. As shown in FIG. 2, the light source 10 includes a circuit board 11, a plurality of semiconductor light emitting devices 12, 12... a lower reflector 13 and an upper reflector 14.

For example, LED (Light Emitting Diode) may be used as the semiconductor light emitting devices 12, 12,.... The semiconductor light emitting devices 12, 12,... serve as a surface-emitting light source, and are provided in parallel in the left-right direction in a state where a light emitting surface faces a front direction.

Drive current is separately supplied to each of the semiconductor light emitting devices 12, 12,... from a lighting circuit (not shown) The semiconductor light emitting devices 12, 12... to which the drive current is supplied are turned on and the semiconductor light emitting devices 12, 12... to which the drive current is not supplied are maintained in a turned off state.

Further, for each of the semiconductor light emitting devices 12, 12, • • • , a control for changing the current value of drive current supplied from the lighting circuit can be separately performed.

As shown in FIGS. 2 and 3, the lower reflector 13 and the upper reflector 14 are respectively provided in the lower side and the upper side with the semiconductor light emitting devices 12 sandwiched therebetween. The lower reflector 13 and the upper reflector 14 respectively include a reflection surface 13a substantially facing upward and a reflection surface 14a substantially facing downward. The reflection surface 13a and the reflection surface 14a are respectively continuous to a lower edge and an upper edge of the semiconductor light emitting devices 12, 12, ....

The reflection surface 13a of the lower reflector 13 is formed in a paraboloidal surface, for example and the reflection surface 14a of the upper reflector 14 is formed in a hyperboloidal surface, for example. The light reflected by the reflection surface 13a is directed more upward than the light reflected by the reflection surface 14a.

A movable shade 15 is provided on the lamp unit 6. The movable shade 15 is configured to cover or uncover the reflection surface 13a of the lower reflector 13 and has a size enough to cover the entire surface of the reflection surface 13a. As the movable shade 15 moves, the shielding range of the light which is emitted from the semiconductor light emitting devices 12 and directed to the reflection surface 13a of the lower reflector 13 is changed according to the moving position of the movable shade.

A lens holder 16 is disposed on a front surface of the bracket 7 (see, FIG. 1). The lens holder 16 has a substantially cylindrical shape having a through hole in a front-rear direction and is disposed on the bracket 7 to cover the light source 10.

A projector lens 17 is mounted on a front surface of the lens holder 16. The projector lens 17 is configured to reverse an image on a focal plane including a rear focal point and to project the light emitted from the semiconductor light emitting devices 12 toward the front area.

As mentioned above, the lamp unit 6 is configured to be tilted in the left-right direction and the front-rear direction by the optical axis adjustment mechanism.

The optical axis adjustment mechanism includes aiming screws 18, 18 (only one aiming screw 18 is shown in FIG. 1) and a leveling actuator 19.

The aiming screws 18, 18 are separated from each other in a left-right direction and the front ends thereof are respectively screwed to the supported parts 7a, 7a of the upper side of the bracket 7.

The leveling actuator 19 includes a driving part 19a and a shaft part 19b protruding from the driving part 19a. The front end of the shaft part 19b is screwed to the supported parts 7a of the lower side of the bracket 7.

In the vehicle headlamp 1, as the aiming screw 18 is rotated, the lamp unit 6 is tilted about the supported parts 7a, 7a as a pivot point, other than the part to which the aiming screw 18 is screwed, and thus optical axis adjustment (leveling adjustment) of the lamp unit 6 is performed.

Further, as the shaft part 19b of the leveling actuator 19 is rotated by the driving force of the driving part 19a, the lamp unit 6 is tilted about the supported parts 7a, 7a as a pivot point, other than the part to which the shaft part 19b is screwed and thus optical axis adjustment (leveling adjustment) of the lamp unit 6 is performed.

For example, a detection camera (not shown) including an imaging device such as CCD (Charge Coupled Device) is mounted on a vehicle. The irradiation area of the vehicle headlamp 1 is captured by the detection camera periodically. As the irradiation area is captured by the detection camera, an image data is generated and then an image processing is carried out to detect the presence or the presence position of an object existing at the irradiation area such as a preceding vehicle, an oncoming vehicle, a pedestrian, a sign or a signal.

In the vehicle headlamp 1 configured as described above, it is possible to change the light distribution pattern formed by light which are emitted from the left lamp 1A and the right lamp 1B by controlling turning on/off of the semiconductor light emitting devices 12 and light shielding range by the movable shade 15.

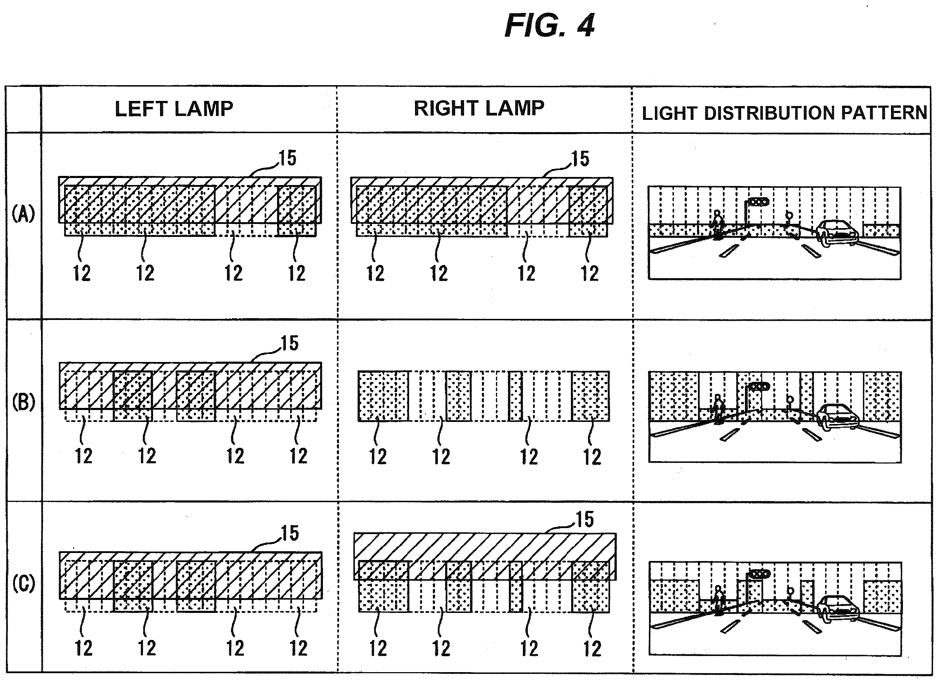

Hereinafter, each of the light distribution patterns formed by the above-mentioned control will be described with reference to Fig. 4. Further, in Fig. 4, a dotted area represents an area in which the semiconductor light emitting device 12 is turned on and a hatched area corresponds to the movable shade 15 and also represents an area in which light is shielded by the movable shade 15. Accordingly, a light irradiation area of the light distribution pattern corresponds to an area in which the semiconductor light emitting device 12 is turned on and is not shielded by the movable shade 15.

FIG. 4(A) shows a case where the same control of the turning on/off of the semiconductor light emitting devices 12 is made in the left lamp 1A and the right lamp 1B and the same control of the light shielding range by the movable shade 15 is made in the left lamp 1A and the right lamp 1B. In case of FIG. 4(A), a portion of the semiconductor light emitting devices 12 is turned off and light which is irradiated upward is respectively shielded by the movable shades 15, 15.

In case of FIG. 4(A), it is possible to prevent glare from being given to pedestrians or occupants of oncoming vehicle.

FIG. 4(B) shows a case where a control of the turning on/off of the semiconductor light emitting devices 12 is different from each other in the left lamp 1A and the right lamp 1B and a control of the light shielding range by the movable shade 15 is made in the left lamp 1A. In case of FIG. 4(B), different portion of the semiconductor light emitting devices 12 is respectively turned off in each of the left lamp 1A and the right lamp 1B and light which is irradiated upward is shielded by the movable shade 15 in the left lamp 1A.

In case of FIG. 4(B), while a wide irradiation range is secured, it is possible to prevent glare from being given to pedestrians or occupants of oncoming vehicle.

To contrary to the above, a portion of the semiconductor light emitting devices 12 may be turned off in the left lamp 1A and the right lamp 1B and light may be shielded by the movable shades 15 in the left lamp 1A.

In case of FIG. 4(B), light which is irradiated upward is shielded by the movable shades 15 in either the left lamp 1A or the right lamp 1B. Accordingly, light shielding control using the movable shade 15 is made in either the left lamp 1A or the right lamp 1B and, the movable shade 15 is disposed in either the left lamp 1A or the right lamp 1B.

FIG. 4(C) shows a case where a control of the turning on/off of the semiconductor light emitting devices 12 is different from each other in the left lamp 1A and the right lamp 1B and a control of the light shielding range by the movable shade 15 is different from each other in the left lamp 1A and the right lamp 1B. In case of FIG. 4(C), different portion of the semiconductor light emitting devices 12 is respectively turned off in each of the left lamp 1A and the right lamp 1B and light which is irradiated upward is respectively shielded by the movable shades 15, 15 in the left lamp 1A and the right lamp 1B.

In case of FIG. 4(C), while a wide irradiation range is secured, it is possible to prevent glare from being given to pedestrians or occupants of oncoming vehicle. Further, when a light spot emitted from a traffic light is detected, light is not irradiated to the light spot and thus visibility for the light is improved.

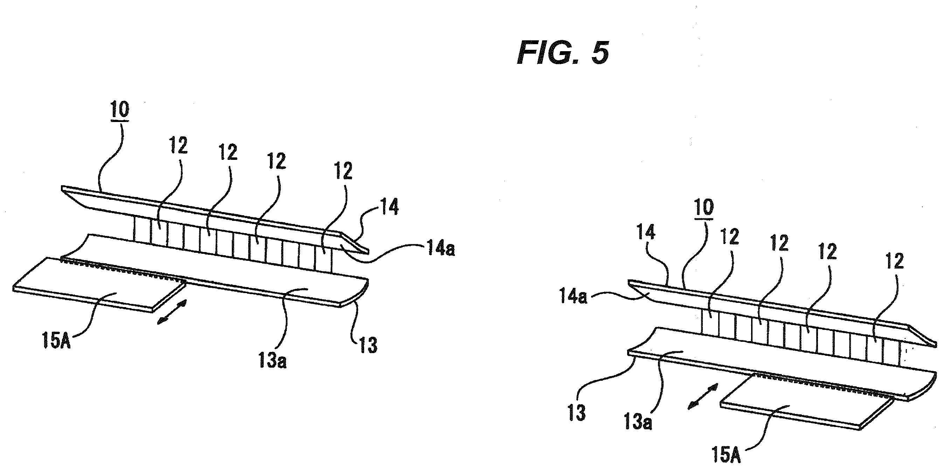

In the above-described embodiment, there has been described a case where the movable shades 15, 15 have a size enough to cover the entire reflection surface 13a of the lower reflector 13. Meanwhile, a control of the light shielding range may be performed by the movable shades 15A, 15A having a size enough to cover at least a portion (for example, half portion) of the reflection surfaces 13a, 13a of the lower reflectors 13, 13 in the left lamp 1A and the right lamp 1B, as shown in FIG. 5.

The movable shade 15A in the left lamp 1A is configured to cover a left half portion, for example, of the reflection surface 13a of the lower reflector 13 and the movable shade 15A in the right lamp 1B is configured to cover a right half portion, for example, of the reflection surface 13a of the lower reflector 13.

On the contrary, the movable shade 15A in the left lamp 1A may be configured to cover or uncover a right half portion of the reflection surface 13a of the lower reflector 13 and the movable shade 15A in the right lamp 1B may be configured to cover or uncover a left half portion of the reflection surface 13a of the lower reflector 13.

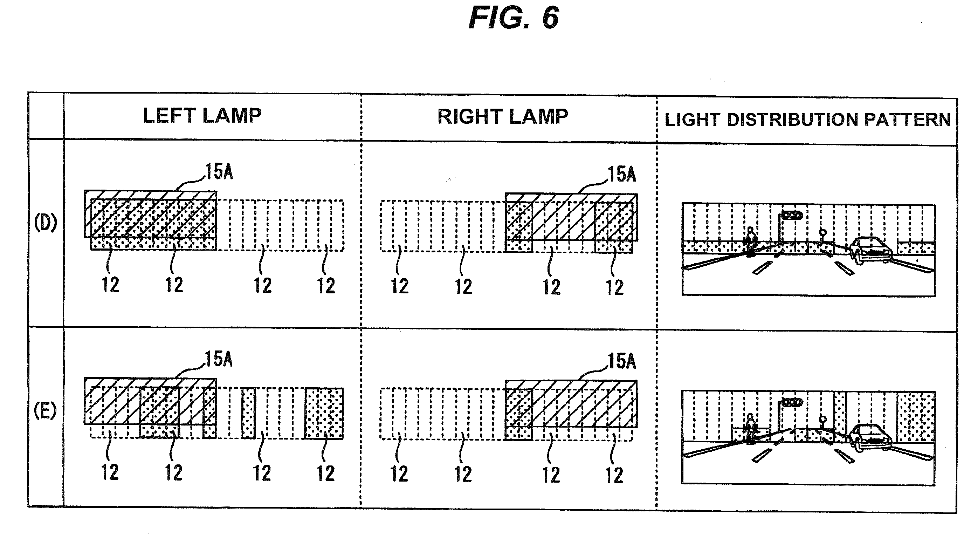

Control of the light distribution pattern using the movable shades 15A, 15A will be now described (see, FIG. 6).

FIG. 6(D) shows a case where all of the semiconductor light emitting devices 12 in a range which cannot be shielded by the movable shades 15A, 15A are turned off, a control of the turning on/off of the semiconductor light emitting devices 12 is different from each other in the left lamp 1A and the right lamp 1B and control of the light shielding range using the movable shades 15A, 15A is made in the left lamp 1A and the right lamp 1B. In case of FIG. 6(D), different portion of the semiconductor light emitting devices 12 is respectively turned off in each of the left lamp 1A and the right lamp 1B and light which is irradiated upward is respectively shielded by the movable shades 15A, 15A in the left lamp 1A and the right lamp 1B.

In case of FIG. 4(D), it is possible to prevent glare from being given to pedestrians or occupants of oncoming vehicle.

FIG. 6(E) shows a case where a control of the turning on/off of the semiconductor light emitting devices 12 is different from each other in the left lamp 1A and the right lamp 1B and a control of the light shielding range by the movable shades 15A, 15A is made in the left lamp 1A and the right lamp 1B. In case of FIG. 6(B), different portion of the semiconductor light emitting devices 12 is respectively turned off in each of the left lamp 1A and the right lamp 1B and light which is irradiated upward is respectively shielded by the movable shades 15A, 15A in the left lamp 1A and the right lamp 1B.

In case of FIG. 6(E), while a wide irradiation range is secured, it is possible to prevent glare from being given to pedestrians or occupants of oncoming vehicle.

Since the size of the movable shades 15A, 15A is small, a driving force of a drive mechanism for the movable shades 15A, 15A can be reduced and the size of the drive mechanism can be miniaturized and thus it is possible to reduce a manufacturing cost of the vehicle headlamp 1.

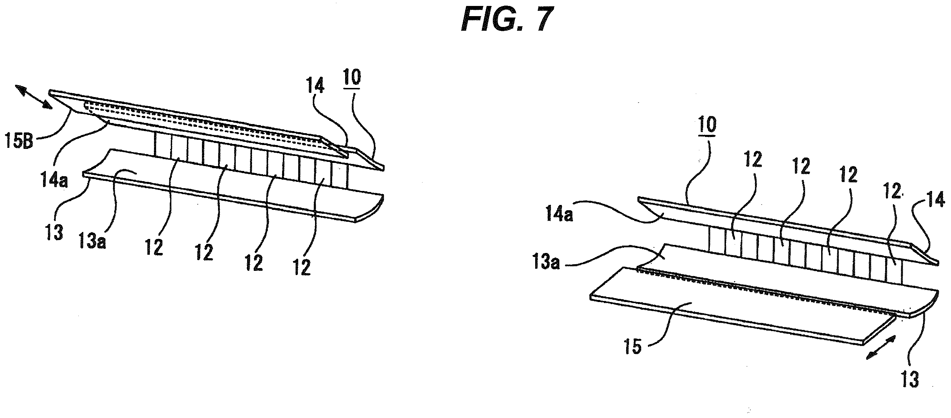

Further, although there has been described a case where the light shielding range is controlled by covering or uncovering the entire portion or a portion of the reflection surface 13a of the lower reflector 13 using the movable shades 15A, 15A, the light shielding range may be controlled by covering or uncovering the entire portion of the reflection surface 13a of the lower reflector 13 in the left lamp 1A using the movable shade 15 and by covering or uncovering the entire portion of the reflection surface 14a of the upper reflector 14 in the right lamp 1B using the movable shade 15B, as shown in FIG. 7.

Further, a control of the light shielding range may be performed by the movable shade 15B to cover/uncover the reflection surface 14a of the upper reflector 14 in the left lamp 1A and the movable shade 15 to cover/uncover the reflection surface 13a of the lower reflector 13 in the right lamp 1B.

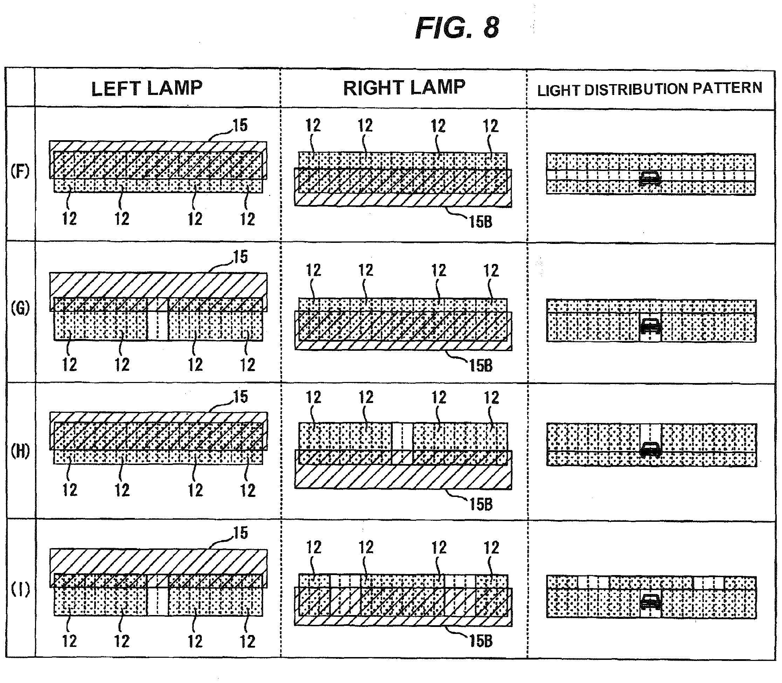

Controlling of the light distribution pattern using the movable shades 15, 15B will be now described with reference to FIG. 8.

FIG. 8(F) shows a case where a control of the light shielding range by the movable shades 15, 15B is made in the left lamp 1A and the right lamp 1B. In case of FIG. 8(F), all of the semiconductor light emitting devices 12 are turned on in the left lamp 1A and the right lamp 1B, light which is irradiated upward is shielded by the movable shade 15 in the left lamp 1A, and light which is irradiated downward is shielded by the movable shade 15B in the right lamp 1B.

In case of FIG. 8(F), it is possible to prevent glare from being given to occupants of oncoming vehicle or preceding vehicle.

FIG. 8(G) shows a case where a control of the turning on/off of the semiconductor light emitting devices 12 is different from each other in the left lamp 1A and the right lamp 1B and a control of the light shielding range by the movable shades 15, 15B is made in the left lamp 1A and the right lamp 1B. In case of FIG. 8(G), a portion of the semiconductor light emitting devices 12 is turned off in the left lamp 1A, all of the semiconductor light emitting devices 12 is turned on in the right lamp 1B, light which is irradiated upward is shielded by the movable shade 15 in the left lamp 1A and light which is irradiated downward is shielded by the movable shade 15B in the right lamp 1B.

In case of FIG. 8(G), while a wide irradiation range is secured, it is possible to prevent glare from being given to occupants of oncoming vehicle or preceding vehicle.

FIG. 8(H) shows a case where a control of the turning on/off of the semiconductor light emitting devices 12 is different from each other in the left lamp 1A and the right lamp 1B and a control of the light shielding range by the movable shades 15, 15B is made in the left lamp 1A and the right lamp 1B. In case of FIG. 8(H), all of the semiconductor light emitting devices 12 are turned on in the left lamp 1A, a portion of the semiconductor light emitting devices 12 is turned off in the right lamp 1B, light which is irradiated upward is shielded by the movable shade 15 in the left lamp 1A and light which is irradiated downward is shielded by the movable shade 15B in the right lamp 1B.

In case of FIG. 8(H), while a wide irradiation range is secured, it is possible to prevent from glare being given to occupants of oncoming vehicle or preceding vehicle.

FIG. 8(I) shows a case where a control of the turning on/off of the semiconductor light emitting devices 12 is different from each other in the left lamp 1A and the right lamp 1B and a control of the light shielding range by the movable shades 15, 15B is made in the left lamp 1A and the right lamp 1B. In case of FIG. 8(I), different portion of the semiconductor light emitting devices 12 is respectively turned off in each of the left lamp 1A and the right lamp 1B, light which is irradiated upward is shielded by the movable shade 15 in the left lamp 1A and light which is irradiated downward is shielded by the movable shade 15B in the right lamp 1B.

In case of FIG. 8(I), while a wide irradiation range is secured, it is possible to prevent glare from being given to occupants of oncoming vehicle or preceding vehicle.

As mentioned above, since the movable shades 15, 15B are configured to cover/uncover the reflection surface 13a of the lower reflector 13 and the reflection surface 14a of the upper reflector 14, it is possible to form a light distribution pattern which can be divided in an upper-lower direction without separating the semiconductor light emitting devices 12 from each other in the upper-lower direction. Further, it is possible to perform a proper light distribution control according to the driving condition of the vehicle by widening the irradiation range in the upper-lower direction.

In a case where the light distribution pattern is formed by controlling turning on/off of the semiconductor light emitting devices 12 and light shielding range using the movable shades 15, 15A, 15B, it is possible to form a light distribution pattern with partially different brightness by controlling the current value of drive current for the semiconductor light emitting devices 12, respectively.

Further, in the control (see, FIGS. 7 and 8) using the movable shades 15, 15B mentioned above, a range of the light distribution pattern controlled by the movable shade 15 and a range of the light distribution pattern controlled by the movable shade 15B are not overlapped from each other.

Accordingly, the brightness change which is caused by the change in the current value of drive current for the semiconductor light emitting devices 12 does not affect on light emitted from the semiconductor light emitting devices 12 which are not subjected to the change in the current value of drive current.

As described above, since in the vehicle headlamp 1, the light distribution pattern is formed by controlling turning on/off of the semiconductor light emitting devices 12 and light shielding range using the movable shades 15, 15A, 15B, it is possible to perform a proper light distribution control according to the driving condition of the vehicle in order to improve the visibility and prevent the occurrence of the glare.

Further, since the movable shades 15, 15A, 15B are respectively provided to each of the lamp units 6, 6, it is possible to improve a degree of light distribution control.

All of the shapes and structures of the respective portions shown in the above-mentioned embodiment are merely illustrative when the invention is embodied, and the technical scope of the invention should not be interpreted in a limited way.

## Claims

1. A vehicle headlamp (1), comprising:
a light source (10) comprising:
a circuit board (11) whose surface is directed toward a front area of the vehicle headlamp (1);
a plurality of semiconductor light emitting elements (12) arranged in a line on the surface of the circuit board and each configured to emit light;
an upper reflector (14) disposed on the surface of the circuit board and configured to reflect the light emitted from the semiconductor light emitting elements toward the front area;
a lower reflector (13) disposed on the surface of the circuit board and configured to reflect the light emitted from the semiconductor light emitting elements toward the front area, wherein the semiconductor light emitting elements are disposed between the upper reflector and the lower reflector; and
a movable shade (15) configured to move in a front-rear direction of the vehicle headlamp so as to cover/uncover the upper reflector (14), wherein when the movable shade (15) covers the upper reflector (14), the light which is incident on the upper reflector (14) is blocked by the movable shade,
wherein the vehicle headlamp is configured to form certain different light distribution patterns by turning on/off a different portion of the respective semiconductor light emitting elements and moving the movable shade in the front-rear direction for each of the different light distribution patterns.

2. The vehicle headlamp of claim 1, wherein the movable shade (15) is configured to cover/uncover the lower reflector (13).

3. The vehicle headlamp of claim 1, wherein the moveable hade (15) is configured to cover/uncover the upper reflector (14).

4. The vehicle headlamp of any one of claims 1 to 3, wherein the movable shade (15) entirely covers a reflection surface of said one of the upper reflector (14) and the lower reflector (13).

5. The vehicle headlamp of any one of claims 1 to 3, wherein the movable shade (15) partially covers a reflection surface of said one of the upper reflector (14) and the lower reflector (13).

6. The vehicle headlamp of any one of claims 1 to 5, wherein a reflection surface (13a) of the lower surface (13) is formed in a paraboloidal surface, and a reflection surface (14a) of the upper surface (14) is formed in a hyperboloidal surface.

7. A light distribution pattern control system, comprising:
a left lamp (1A) and a right lamp (1B), each of which has the same configuration as the vehicle headlamp of claim 1,
wherein the left lamp (1A) is configured to form a first light distribution pattern by turning on/off of the respective semiconductor light emitting elements and moving the movable shade in the front-rear direction, and
wherein the right lamp (1B) is configured to form a second light distribution pattern by turning on/off of the respective semiconductor light emitting elements and moving the movable shade in the front-rear direction, and
wherein a light distribution pattern of the light distribution pattern control system is formed by combining the first and second light distribution patterns.

## Patentansprüche

1. Fahrzeugscheinwerfer (1), umfassend:
eine Lichtquelle (10), umfassend:
eine Leiterplatte (11), deren Oberfläche auf einen vorderen Bereich des Fahrzeugscheinwerfers (1) gerichtet ist;
eine Vielzahl von Halbleiter-Leuchtelementen (12), die in einer Reihe an der Oberfläche der Leiterplatte angeordnet sind und jeweils konfiguriert sind, um Licht zu emittieren;
einen oberen Reflektor (14), der an der Oberfläche der Leiterplatte angeordnet ist und konfiguriert ist, um das von den Halbleiter-Leuchtelementen emittierte Licht auf den vorderen Bereich zu reflektieren;
einen unteren Reflektor (13), der an der Oberfläche der Leiterplatte angeordnet ist und konfiguriert ist, um das von den Halbleiter-Leuchtelementen emittierte Licht auf den vorderen Bereich zu reflektieren, wobei die Halbleiter-Leuchtelemente zwischen dem oberen Reflektor und dem unteren Reflektor angeordnet sind; und
eine bewegbare Blende (15), die konfiguriert ist, um sich in einer Richtung von vorne nach hinten des Fahrzeugscheinwerfers zu bewegen, um den oberen Reflektor (14) ab-/aufzudecken, wobei, wenn die bewegbare Blende (15) den oberen Reflektor (14) abdeckt, das Licht, das auf den oberen Reflektor (14) fällt, durch die bewegbare Blende blockiert wird,
wobei der Fahrzeugscheinwerfer konfiguriert ist, um gewisse unterschiedliche Lichtverteilungsmuster durch Ein-/Ausschalten eines unterschiedlichen Abschnitts der jeweiligen Halbleiter-Leuchtelemente und Bewegen der bewegbaren Blende in der Richtung von vorne nach hinten für jedes der verschiedenen Lichtverteilungsmuster zu bilden.

2. Fahrzeugscheinwerfer nach Anspruch 1, wobei die bewegbare Blende (15) konfiguriert ist, um den unteren Reflektor (13) ab-/aufzudecken.

3. Fahrzeugscheinwerfer nach Anspruch 1, wobei die bewegbare Blende (15) konfiguriert ist, um den oberen Reflektor (14) ab-/aufzudecken.

4. Fahrzeugscheinwerfer nach einem der Ansprüche 1 bis 3, wobei die bewegbare Blende (15) eine Reflexionsfläche des einen von dem oberen Reflektor (14) und dem unteren Reflektor (13) vollständig abdeckt.

5. Fahrzeugscheinwerfer nach einem der Ansprüche 1 bis 3, wobei die bewegbare Blende (15) eine Reflexionsfläche des einen von dem oberen Reflektor (14) und dem unteren Reflektor (13) teilweise abdeckt.

6. Fahrzeugscheinwerfer nach einem der Ansprüche 1 bis 5, wobei eine Reflexionsfläche (13a) der unteren Oberfläche (13) als Paraboloidfläche gebildet ist, und eine Reflexionsfläche (14a) der oberen Oberfläche (14) als Hyperboloidfläche gebildet ist.

7. Lichtverteilungsmustersteuersystem, umfassend:
einen linken Leuchtkörper (1A) und einen rechten Leuchtkörper (1B), die jeweils die gleiche Konfiguration wie der Fahrzeugscheinwerfer nach Anspruch 1 aufweisen,
wobei der linke Leuchtkörper (1A) konfiguriert ist, um durch Ein-/Ausschalten der jeweiligen Halbleiter-Leuchtelemente und Bewegen der bewegbaren Blende in der Richtung von vorne nach hinten ein erstes Lichtverteilungsmuster zu bilden, und
wobei der rechte Leuchtkörper (1B) konfiguriert ist, um durch Ein-/Ausschalten der jeweiligen Halbleiter-Leuchtelemente und Bewegen der bewegbaren Blende in der Richtung von vorne nach hinten ein zweites Lichtverteilungsmuster zu bilden, und
wobei ein Lichtverteilungsmuster des Lichtverteilungsmustersteuersystems durch Kombinieren der ersten und zweiten Lichtverteilungsmuster gebildet wird.

## Revendications

1. Phare de véhicule (1), comprenant :
une source de lumière (10) comprenant :
une carte de circuit (11) dont une surface est dirigée vers une zone avant du phare de véhicule (1) ;
une pluralité d'éléments émetteurs de lumière à semi-conducteur (12) agencés en une ligne sur la surface de la carte de circuit et chacun étant configuré pour émettre de la lumière ;
un réflecteur supérieur (14) disposé sur la surface de la carte de circuit et configuré pour réfléchir la lumière émise à partir des éléments émetteurs de lumière à semi-conducteur vers la zone avant ;
un réflecteur inférieur (13) disposé sur la surface de la carte de circuit et configuré pour réfléchir la lumière émise à partir des éléments émetteurs de lumière à semi-conducteur vers la zone avant, dans lequel les éléments émetteurs de lumière à semi-conducteur sont disposés entre le réflecteur supérieur et le réflecteur inférieur ; et
un écran mobile (15) configuré pour se déplacer dans un sens avant-arrière du phare de véhicule afin de couvrir/découvrir le réflecteur supérieur (14), dans lequel lorsque l'écran mobile (15) couvre le réflecteur supérieur (14), la lumière qui est incidente sur le réflecteur supérieur (14) est bloquée par l'écran mobile,
dans lequel le phare de véhicule est configuré pour former certains motifs de distribution de lumière différents en allumant/éteignant une portion différente des éléments émetteurs de lumière à semi-conducteur respectifs et en déplaçant l'écran mobile dans le sens avant-arrière pour chacun des motifs de distribution de lumière différents.

2. Phare de véhicule selon la revendication 1, dans lequel l'écran mobile (15) est configuré pour couvrir/découvrir le réflecteur inférieur (13).

3. Phare de véhicule selon la revendication 1, dans lequel l'écran mobile (15) est configuré pour couvrir/découvrir le réflecteur supérieur (14).

4. Phare de véhicule selon l'une quelconque des revendications 1 à 3, dans lequel l'écran mobile (15) couvre entièrement une surface de réflexion dudit un du réflecteur supérieur (14) et du réflecteur inférieur (13).

5. Phare de véhicule selon l'une quelconque des revendications 1 à 3, dans lequel l'écran mobile (15) couvre partiellement une surface de réflexion dudit un du réflecteur supérieur (14) et du réflecteur inférieur (13).

6. Phare de véhicule selon l'une quelconque des revendications 1 à 5, dans lequel une surface de réflexion (13a) de la surface inférieure (13) est formée dans une surface paraboloïde et une surface de réflexion (14a) de la surface supérieure (14) est formée dans une surface hyperboloïde.

7. Système de commande de motif de distribution de lumière, comprenant :
une lampe de gauche (1A) et une lampe de droite (1B), chacune d'elles a la même configuration que le phare de véhicule de la revendication 1,
dans lequel la lampe de gauche (1A) est configurée pour former un premier motif de distribution de lumière en allumant/éteignant les éléments émetteurs de lumière à semi-conducteur respectifs et en déplaçant l'écran mobile dans le sens avant-arrière, et
dans lequel la lampe de droite (1B) est configurée pour former un second motif de distribution de lumière en allumant/éteignant les éléments émetteurs de lumière à semi-conducteur respectifs et en déplaçant l'écran mobile dans le sens avant-arrière, et
dans lequel un motif de distribution de lumière du système de commande de motif de distribution de lumière est formé en combinant les premier et second motifs de distribution de lumière.
